**Europäisches Patentamt**

**European Patent Office** ·

**Office européen des brevets**

(19)

(11) Veröffentlichungsnummer: **0 043 592**
**A1**

(12) # EUROPÄISCHE PATENTANMELDUNG

(21) Anmeldenummer: **81105316.4**

(22) Anmeldetag: **08.07.81**

(51) Int. Cl.³: **B 66 B 9/08,** F 16 H 55/26

(30) Priorität: **08.07.80 DE 3025727**

(43) Veröffentlichungstag der Anmeldung: **13.01.82**
**Patentblatt 82/2**

(84) Benannte Vertragsstaaten: **AT BE CH DE FR GB IT LI LU NL SE**

(71) Anmelder: **Meise, Albert, Am Flottgraben 32, D-4800 Bielefeld 16 (DE)**
Anmelder: **Frey, Georg, Buchfinkenweg 53C, D-4800 Bielefeld 1 (DE)**

(72) Erfinder: **Meise, Albert, Am Flottgraben 32, D-4800 Bielefeld 16 (DE)**
Erfinder: **Frey, Georg, Buchfinkenweg 53C, D-4800 Bielefeld 1 (DE)**

(74) Vertreter: **Patentanwälte Ter Meer-Müller-Steinmeister, Artur-Ladebeck-Strasse 51, D-4800 Bielefeld 1 (DE)**

(54) **Treppenlift.**

(57) Eine Treppenlift umfasst zwei parallel übereinander liegende, ortsfeste Führungsschienen (16, 18), auf denen wenigstens zwei übereinander angeordnete Führungsorgane (22, 24) eines Wagens (20) laufen. Wenigstens einer Führungsschiene (16, 18) ist eine Zahnstange (32, 34) zugeordnet, mit der ein angetriebenes Zahnrad (38) an wenigstens einem der Führungsorgane (22, 24) kämmt. Bei Verwendung von zwei Zahnstangen und zwei synchron angetriebenen Führungsorganen ist es auch auf Strecken wechselnder Steigung, insbesondere mit waagerechten Abschnitten, möglich, die senkrechte Orientierung des Wagens (20) stets beizubehalten. Die Zahnstange wird vorzugsweise gebildet durch lose in ein geschlitztes Rohr eingelegte Zahnkörper (32) und Distanzstücke (34), die insgesamt im wesentlichen die Form der Zahnstange einnehmen.

0043592

BESCHREIBUNG    BEZEICHNUNG
                                                    siehe Titelseite
Die Erfindung betrifft einen Treppenlift mit zwei parallel übereinander angeordneten, ortsfesten Führungsschienen sowie wenigstens einem Wagen mit wenigstens je einem oberen und unteren an
dem Wagen befestigten Führungsorgan, das mit der oberen bzw.
unteren Führungsschiene in Eingriff steht.

Bei einem bekannten System dieser Art erfolgt der Antrieb mit
Hilfe einer in senkrechter Richtung am Wagen angebrachten, angetriebenen Schnecke, die nacheinander mit Schneckenradsegmenten in Eingriff tritt, die an senkrechten Streben zwischen den
Führungsschienen befestigt sind. Ein wesentlicher Nachteil
dieser Lösung besteht darin, daß der Antrieb nicht für waagerechte Zwischenstücke, z. B. Treppenabsätze verwendet werden
kann. Im übrigen ist die genaue Einstellung der Schneckenradsegmente in Kurven, insbesondere in den bei Treppenkehren eintretenden engen Innenkurven äußerst schwierig.

Bei einer weiteren bekannten Konstruktion befindet sich zwischen einer unteren und einer sehr hoch angeordneten oberen
Führungsschiene eine schräg zu beiden verlaufende dritte Schiene. Der Antrieb arbeitet mit Spreizkräften, die zwischen einer
der Führungsschienen und der dritten Schiene ausgeübt werden.
Diese Spreizkräfte müssen sehr hoch sein, da sie nur zu einem
Teil in Fortbewegungskräfte umgesetzt werden können. Die Bahnlänge ist begrenzt, da ein weiterer Antrieb nicht mehr möglich
ist, wenn die mittlere Schiene die obere oder untere Führungsschiene erreicht hat. Zur Erzielung einer ausreichend langen
Laufstrecke muß die obere Führungsschiene verhältnismäßig hoch
angebracht sein, da ein bestimmter Steigungswinkel der mittleren Antriebsschiene nicht unterschritten werden darf. Es ist daher ein entsprechend hoher und aufwendiger Wagen erforderlich.

Bei einem weiteren bekannten System wird durch einen ortsfesten
Antrieb ein Seil durch ein Rohr gezogen. An dem Seil  sind

0043592

Kugeln festgelegt, an denen der Wagen jeweils eingeklinkt werden kann. Durch Verdrehen der Kugeln verkantet sich das Seil, so daß es am Ansatzpunkt zu den Kugeln häufig bricht. Im übrigen erwärmt sich das Rohr in unerwünschter Weise durch die Bewegung des Seiles und der Kugeln. Scharfe Krümmungen sind naturgemäß problematisch.

Bei einem anderen ebenfalls bekannten System werden Kugeln in einem durch Rohrbögen an den Enden verbundenen Doppelrohr mit Hilfe eines Zahnrades umgewälzt. Durch einen Schlitz des Rohres greift zwischen die Kugeln ein Finger des mitzunehmenden Wagens.

Beim Umwälzen der Kugeln entstehen hohe Reibungskräfte, so daß die Länge einer Förderstrecke begrenzt ist.

Allen bekannten Systemen ist gemeinsam, daß sie verhältnismäßig aufwendig und damit teuer sind. Die meisten der bekannten Systeme haben den Nachteil, daß sie nur für Steigungen, beispielsweise eine Treppenschräge, nicht jedoch bei waagerechten Teilstrecken geeignet sind.

Der Erfindung liegt die Aufgabe zugrunde, ein Treppenliftsystem der eingangs genannten Art zu schaffen, das mit verhältnismäßig geringen Kosten hergestellt werden kann und auch für Strecken mit wechselnden Steigungen, insbesondere mit waagerechten Strecken und engen Radien geeignet ist.

Diese Aufgabe wird erfindungsgemäß dadurch gelöst, daß an wenigstens einer Führungsschiene eine Zahnstange vorgesehen ist und daß das entsprechende Führungsorgan ein angetriebenes, mit der Zahnstange kämmendes Zahnrad aufweist.

Bei Anlagen mit ausschließlich einer schräg ansteigenden Fahrstrecke reicht ein Antriebszahnrad aus. Sofern auch waagerechte Strecken vorgesehen sind, sind an beiden Führungsschienen Zahn-

0043592

räder vorgesehen. Die Zahnräder werden synchron angetrieben und bewirken, daß der Wagen unabhängig von der jeweiligen Steigung stets in der senkrechten Stellung verbleibt.

Die Zahnstangen befinden sich vorzugsweise innerhalb der rohrförmig ausgebildeten Führungsschienen, in die die Zahnräder durch einen Schlitz eintreten. Die Führungsschienen weisen vorzugsweise ein rundes, gegebenenfalls jedoch auch ein anderweitiges Querschnittsprofil auf.

Die Führungsorgane weisen neben den Zahnrädern Führungsrollen auf, die mit den Führungsschienen von der dem Schlitz gegenüberliegende Seite her in Berührung treten. Die Führungsrollen weisen eine konkave Lauffläche auf, so daß sie die Führungsschienen umgreifen. Die Zahnräder und Führungsrollen befinden sich auf einer gemeinsamen Halterung, die zumindest dann in Bezug auf den Wagen um eine quer zu den Führungsschienen verlaufende Achse schwenkbar ist, wenn unterschiedliche Steigungen vorhanden sind.

Bei einer besonders bevorzugten Ausführungsform werden die Zahnstangen gebildet durch Zahnkörper, die abwechselnd mit Distanzstücken in die als Rohre ausgebildeten Führungsschienen lose eingelegt sind. Die Distanzstücke sind derart bemessen, daß sie jeweils den Eintritt eines Zahnrad-Zahnes zwischen zwei Zahnkörper gestatten. Die Zahnkörper weisen beispielsweise die Form einer Kugel auf. Die Anordnung aus Zahnkörpern und Distanzstücken kann mit einem gewissen Spiel in die Rohre eingelegt sein, so daß sie auch unter geometrisch schwierigen Verhältnissen den Eintritt der Zahnrad-Zähne gestatten. Zur Vermeidung scharfer Brems- oder Bescheunigungsstöße können die Zahnkörper und Distanzstücke am unteren Ende durch eine Feder abgestützt sein. Eine verhältismäßig weiche Feder kann sich am oberen Ende der Reihe aus Zahnkörpern und Distanzstücken befinden. Insbesondere bei geometrisch komplizierten Biegungen ist die beschriebene Art der Herstellung einer "Zahnstange" wesentlich einfacher als derjenige einer Zahnstange im üblichen Sinne.

Im folgenden wird ein bevorzugtes Ausführungsbeispiel der Erfindung anhand der beigefügten Zeichnung näher erläutert.

Fig. 1          zeigt eine schematische Gesamtdarstellung des erfindungsgemäßen Treppenliftsystems;

Fig. 2          zeigt einen Querschnitt durch eine Führungsschiene mit Führungsorgan;

Fig. 3          ist ein Schnitt entlang der Linie III-III in Fig. 2;

Fig. 4          entspricht Fig. 3, zeigt jedoch eine andere Ausführungsform der Erfindung;

Fig. 5          veranschaulicht die Umrißlinie der Zahnkörper in einer weiteren Ausführungsform;

Fig. 6          entspricht Fig. 2, bezieht sich jedoch auf die Ausführungsform gemäß Fig. 4;

Fig. 7 bis 9    sind schematische Schnitte durch das Rohr mit den Zahnkörpern zur Veranschaulichung verschiedener Ausführungsformen.

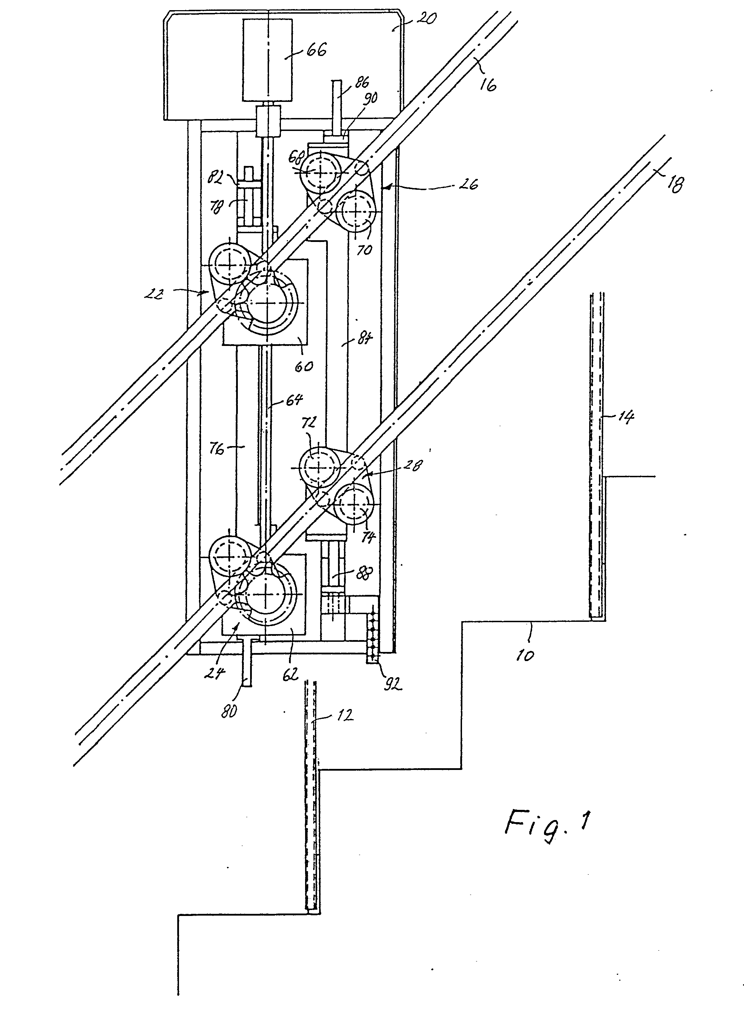

In Fig. 1 ist eine schematisch angedeutete Treppe mit 10 bezeichnet. An der Vorderseite jeder zweiten Stufe sind Stützen 12,14 befestigt, die in nicht näher gezeigter Weise zwei übereinanderliegende Führungsschienen 16,18 aufnehmen. Die Führungsschienen 16,18 weisen einen konstanten Abstand in senkrechter Richtung auf und behalten diesen Abstand auch in nicht gezeigten Abschnitten bei, in denen sie unter einem anderen Winkel oder sogar waagerecht verlaufen.

An den Führungsschienen verläuft ein nicht näher dargestellter Wagen 20, der beispielsweise die Form eines Rahmens aufweisen kann, an dem ein Sitz zur Aufnahme von Behinderten, eine Plattform zur Aufnahme von Rollstühlen oder dergleichen befestigt sein kann.

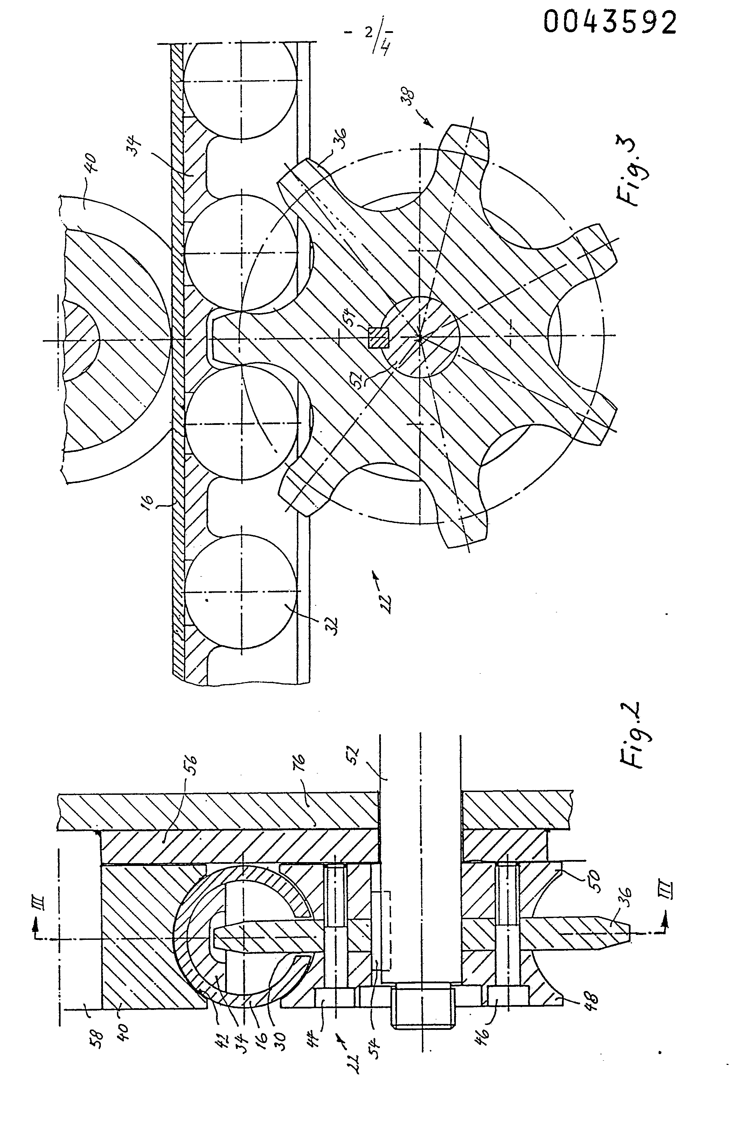

An der in Fig. 1 dem Betrachter zugewandten Rückseite des Wagens 20 befinden sich im dargestellten Beispiel vier Führungsorgane 22, 24, 26, 28. Zunächst soll zum besseren Verständnis der Führungsorgane 22, 24 und ihres Zusammenwirkens mit den Führungsschienen 16,18 auf Fig. 2 und 3 Bezug genommen werden.

Gemäß Fig. 2 und 3 weist die Führungsschiene 16 die Form eines im Querschnitt kreisförmigen Rohres auf, das mit einem entlang einer Mantellinie verlaufenden Schlitz 30 versehen ist. Innerhalb der rohrförmigen Führungsschiene 16 befinden sich in laufend abwechselnder Reihenfolge Zahnkörper in der Form von Kugeln 32 und Distanzstücke 34. Die Kugeln 32 und die Distanzstücke 34 sind lose in die rohrförmige Führungsschiene 16 eingefügt. Die Zahnkörper müssen nicht zwangsläufig Kugeln sein, obgleich diese Form im Interesse eines einfachen und sicheren Eingriffs der Zähne 36 eines Zahnrades 38 sinnvoll ist. Die Form der Distanzstücke 34 ist nur insoweit festgelegt, als sie gestatten müssen, daß die Zahnräder 36 in die Führungsschiene 16 eintreten. Im übrigen müssen die Distanzstücke in nicht gezeigter Weise gegen Verdrehen gesichert sein, damit sie nicht den Eintritt der Zähne 36 in die Führungsschiene 16 blockieren. Die rohrförmige Führungsschiene 16 ist an beiden Enden verschlossen, so daß die Reihe aus Kugeln und Distanzstücken - vorzugsweise mit einem gewissen Spiel - festgelegt ist. Am unteren und/oder oberen Ende des Rohres kann sich eine nicht gezeigte Druckfeder befinden.

Die Führungsorgane umfassen neben den Zahnrädern 38 Führungsrollen 40, die sich auf der den Zahnrädern 38 gegenüberliegenden Seite der Führungsschienen befinden. Die Führungsrollen 40 weisen eine konkave Lauffläche 42 auf, deren Querschnittsform der Querschnittsform der Führungsschienen 16,18 angepaßt ist. An beiden Seiten des Zahnrades sind an diesem mit Hilfe von Schrauben 44,46 Führungsscheiben 48,50 befestigt, die ebenfalls eine konkave Lauffläche bilden, die lediglich durch die vorspringenden Zähne 36 des Zahnrades 38 unterbrochen ist.

Durch die Führungsrolle 40, die Führungsscheiben 48 und 50 und das Zahnrad 38 ergibt sich eine sichere Führung des Führungsorgans auf den Führungsschienen, so daß dieses weder von den Schienen abspringen noch auf diesen verdreht werden kann.

Die Anordnung aus Zahnrad 38 und Führungsscheiben 48,50 ist auf einer Antriebswelle 52 mit Hilfe eines Keils 54 in Drehrichtung festgelegt. Die Führungsrolle 40 und das Zahnrad 38 mit den Führungsscheiben 48 und 50 sind auf einer gemeinsamen Trägerplatte 56 (Fig. 2) drehbar gelagert. Zu diesem Zweck ist ein die Führungsrolle 40 aufnehmender Achszapfen 58 in einer entsprechenden Bohrung der Trägerplatte 56 verschweißt. Die Antriebswelle 52 ist in nicht näher gezeigter Weise drehbar in der Trägerplatte 56 gelagert.

Das in Fig. 1 gezeigte Führungsorgan 24 entspricht dem in Fig. 2 und 3 dargestellten Führungsorgan 22, so daß eine erneute Beschreibung nicht notwendig ist. Die Zahnräder 38 beider Führungsorgane werden über Getriebe 60,62 mit Hilfe einer gemeinsamen Antriebswelle 64 synchron angetrieben. Die Antriebswelle 64 wird durch einen gemeinsamen Antriebsmotor 66 gedreht.

0043592

Bei der in Fig. 1 dargestellten Ausführungsform sind zwei weitere Führungsorgane 26 und 28 vorgesehen, die ebenfalls übereinander liegen und den Führungsschienen 16 und 18 zugeordnet sind, jedoch einen Abstand zu den Führungsorganen 22 und 24 entlang den Führungsschienen 16,18 aufweisen. Die Führungsorgane 26 und 28 weisen lediglich zwei Laufrollen 68,70 bzw. 72,74 auf, die den Laufrollen 40 der zunächst beschriebenen Führungsorgane entsprechen können.

Da die synchron angetriebenen Führungsorgane 22 und 24 die stets senkrechte Position des Wagens 20 bestimmen, ist zur Vermeidung einer geometrischen Überbestimmung wenigstens eines der Paare der senkrecht übereinander liegenden Führungsorgane in senkrechter Richtung zu dem Wagen 20 über einen begrenzten Weg verschiebbar. Im dargestellten Beispiel sind beide Führungsorganpaare verschiebbar ausgebil- det. Zu diesem Zweck sind zunächst die angetriebenen Führungsorgane 22 und 24 an einem gemeinsamen, plattenförmigen Träger 76 befestigt, der seinerseits in senkrechter Richtung in bezug auf den Wagen 20 verschoben werden kann. Der Träger 76 weist am oberen und unteren Ende Stifte 78 und 80 auf, die in geeigneten, nicht näher dargestellten Führungen des Wagens 20 gleiten. Diese Verschiebebewegung weist einen oberen Anschlag 82 auf. Mit der Verschiebung des Trägers 76 werden nicht nur die Führungsorgane 22 und 24, sondern auch die Antriebswelle 64, der Antriebsmotor 66 etc. mitgenommen.

In entsprechender Weise befinden sich die Führungsorgane 26 und 28 auf einem gemeinsamen Träger 84, der an seinen oberen und unteren Enden Stifte 86,88 trägt, die in nicht näher bezeichneten Führungen am Wagen 20 gleiten. Auch für den Träger 84 ist ein oberer Anschlag 90 vorgesehen. Die beiden Träger 76,84 stellen sich selbsttätig derart ein, daß wenigstens einer der Träger am oberen Anschlag 82,90 anliegt und somit den Wagen 20 abstützt.

Sofern eine Fortbewegung auf Strecken unterschiedlicher Steigung vorgesehen ist, müssen die Führungsorgane 22,24, 26,28 in bezug auf die Träger 76,84 um quer zu den Führungsschienen 16,18 verlaufende Achsen schwenkbar sein. Diese Achsen werden für die angetriebenen Führungsorgane 22,24 durch die Antriebswellen 52 gebildet, wie andeutungsweise aus Fig. 2 hervorgeht. Eine aufwendige Lagerung der Antriebswelle 52 in dem Träger 76 ist nicht erforderlich, da hier allenfalls geringe Schwenkbewegungen auftreten.

Bei den Führungsorganen 26,28 erfolgt eine entsprechende Schwenkbewegung in den Achsen der oberen Führungsrollen 68,72.

Ein Stromabnehmer 92 läuft auf einer nicht gezeigten Schleifleitung, die sich parallel zu den Führungsschienen erstrecken. Auf diese Weise können der Strom zur Versorgung des Antriebsmotors und ggf. Steuerimpulse übertragen werden.

Das Antriebssystem des erfindungsgemäßen Treppenlifts arbeitet unabhängig von der jeweiligen Steigung der Führungsschienen 16,18 und auch bei waagerechten Strecken innerhalb ein und derselben Anlage. Die Bahnlänge ist praktisch unbegrenzt. Bei großen Bahnlängen kann es zweckmäßig sein, in gewissen Abständen anstelle eines Distanzstücks 34 ein in der Führungsschiene festgelegtes Trennglied zu verwenden, so daß es nicht zu einer übermäßigen Addition von Spiel durch eine lange und ununterbrochene Reihe von Kugeln und Distanzstücken kommt.

Das erfindungsgemäße Treppenliftsystem weist im übrigen eine nicht gezeigte Fangvorrichtung auf, wie sie im Liftbau üblich ist. Eine derartige Fangvorrichtung kann bei dem erfindungsgemäßen Treppenlift beispielsweise in die nicht angetriebenen Führungsorgane 26,28 integriert sein, die zu diesem Zweck Zahnräder aufweisen können, die ebenfalls mit der Zahnstange in Eingriff treten können.

Fig. 4 bis 9 beziehen sich auf verschiedene Abwandlungen der bisher beschriebenen Ausführungsformen, die jedoch grundsätzlich mit der in Fig. 2 und 3 gezeigten Ausführungsform übereinstimmen, so daß diese Figuren nur schematisch ausgeführt sind und die folgende Beschreibung auf die wesentlichen Einzelheiten beschränkt werden soll.

Bei der Ausführungsform gemäß Fig. 2 und 3 entspricht der Durchmesser der Kugeln 32 oder entsprechender Zylinder im wesentlichen dem Innendurchmesser der rohrförmigen Führungsschienen 16. Die verhältnismäßig großen Kugeln erfordern ein Zahnrad mit entsprechend großen Abmessungen, und es besteht der weitere Nachteil, daß die Anordnung aus Kugeln und Distanzkörpern 34 sich in der rohrförmigen Führungsschiene verdreht, so daß der Eingriff der Zähne 36 des Zahnrades 38 behindert werden kann. Diese Verdrehung kann zwar weitgehend durch eine geeignete Abschrägung der seitlichen Flanken des Zahnrades und der Distanzkörper ausgeschaltet werden, da auf diese Weise die Distanzkörper bei jedem Eingriff des Zahnrades wieder in ihre bestimmungsgemäße Position gedrückt werden, jedoch erscheint es als zweckmäßig, den Antrieb in diesem Punkte weiter zu verbessern.

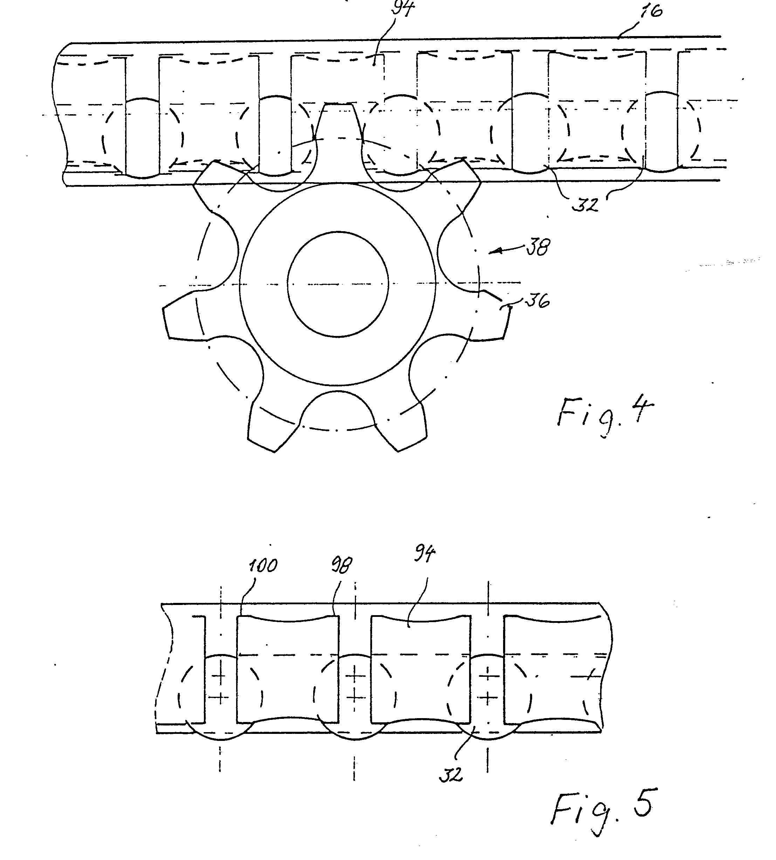

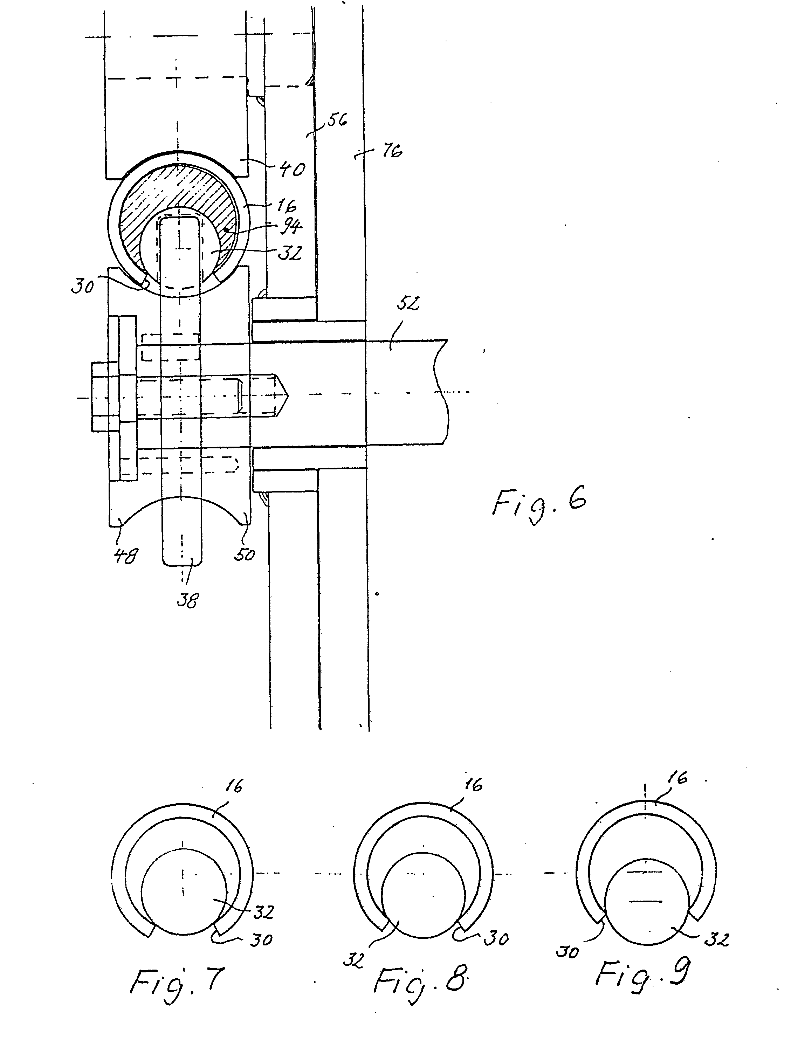

Bei den Ausführungsformen gemäß Fig. 4 bis 9 weisen die Kugeln, die wegen der grundsätzlichen Übereinstimmung des Prinzips ebenfalls mit 32 bezeichnet sind, einen kleineren Durchmesser auf als der Innenraum der rohrförmigen Führungsschiene 16. Die in diesem Falle mit 94 bezeichneten Distanzkörper, die auch hier eine zylindrische Grundform haben, wie etwa aus Fig. 5 hervorgeht, sind auf ihrer gesamten Länge mit einem in Fig. 6 gestrichelt angedeuteten Längsschlitz 96 versehen, der etwas breiter als die Breite der Zähne 36 des Zahnrades 38 ist. An den Enden dieses Längsschlitzes 96 sind die Distanzkörper 94 in nicht gezeigter, jedoch beispielsweise anhand von Fig. 4 und 5 ohne weiteres vorstellbarer Weise kugelkalottenförmig ausgenommen oder abgeschrägt, so daß die Aufnahme der Kugeln 32 in der in Fig. 4 und 5 gezeigten Weise möglich ist.

Im übrigen sind die Distanzkörper 94 auf ihrem Umfang zum Längsmittelbereich hin bogenförmig eingeschnürt, so daß an beiden Enden glatte Ringflächen 98,100 entstehen, die eine definierte Anlage an der Innenwand der Führungsschiene gestatten. In diese Ringflächen können zur Geräuschdämpfung nicht gezeigte O-Ringe oder dgl. eingelassen sein.

Aufgrund des kleineren Kugeldurchmessers nehmen die Kugeln in dem Schlitz 30 eine Position ein, die in den Figuren 7 bis 9 in verschiedenen Varianten dargestellt ist. In jedem Falle ragen die Kugeln 32 im Bereich des Schlitzes 30 über den Innenradius der rohrförmigen Führungsschiene 16 hinaus und in den Schlitz hinein, so daß die Anordnung aus Kugeln 32 und Distanzkörpern 94 nicht in dem Rohr verdrehbar ist. Im übrigen erleichtert die in Richtung des Schlitzes 30 vorgeschobene Position der Kugeln 32 den Eingriff des Zahnrades 38, und der kleinere Kugeldurchmesser gestattet die Verwendung eines kleineren Zahnrades und damit eines kompakteren Antriebs.

Das Zahnrad 38 weist die Form eines Kettenrades auf. Bei Verwendung in Kettentrieben sind Kettenräder nach den einschlägigen Normen Ketten mit bestimmten Bolzen- oder Rollendurchmessern zugeordnet. Im vorliegenden Zusammenhang hat es sich bei Versuchen gezeigt, daß es zweckmässig ist, kugelförmige oder zylindrische Zahnkörper zu verwenden, deren Außendurchmesser etwa 5% kleiner ist als der in den Normen vorgesehene Durchmesser der Kettenbolzen.

Auch bei der zuletzt beschriebenen Ausführungsform besteht die Möglichkeit, bei verhältnismäßig unkomplizierten, geraden Abschnitten einer Förderstrecke eine feste Zahnstange zu verwenden und in Kurven oder bei Stei-

0043592

gungswechseln eine aus losen Zahnkörpern der zuletzt beschriebenen Art zusammengesetzte Zahnstange einzusetzen.

0043592

## PATENTANSPRÜCHE

1. Treppenlift mit zwei parallel übereinander angeordnetenn ortsfesten Führungsschienen sowie wenigstens einem Wagen mit wenigstens je einem oberen und unteren, an dem Wagen befestigten Führungsorgan, das mit den Führungsschienen in Eingriff steht, dadurch g e k e n n z e i c h -n e t, daß an wenigstens einer Führungsschiene (16,18) eine Zahnstange (32,34) vorgesehen ist, und daß das entsprechende Führungsorgan (22,24) ein angetriebenes, mit der Zahnstange kämmendes Zahnrad (38) aufweist.

2. Treppenlift nach Anspruch 1, dadurch g e k e n n -z e i c h n e t, daß an beiden Führungsschienen (16,18) Zahnstangen (32,34) vorgesehen sind, und daß beide Führungsorgane (22,24) synchron angetriebene Zahnräder (38) aufweisen.

3. Treppenlift nach Anspruch 1 oder 2, dadurch g e -k e n n z e i c h n e t, daß die Zahnstange innerhalb einer rohrförmig ausgebildeten Führungsschiene (16,18) angeordnet ist, und daß das Zahnrad (38) durch einen Schlitz (30) der Führungsschiene mit der Zahnstange in Eingriff tritt.

4. Treppenlift nach einem der Ansprüche 1 bis 3, dadurch g e k e n n z e i c h n e t, daß die Führungsorgane Füh-rungsrollen (40;68,70,72,74) auf der dem Zahnrad (38) gegenüberliegenden Seite der Führungsschienen (16,18) umfaßt, die die Führungsschienen mit konkaver Lauffläche (42) umgreifen.

5. Treppenlift nach Anspruch 4, dadurch g e k e n n -z e i c h n e t, daß die Führungsorgane (22,24,26,28) um quer zu den Führungsschienen (16,18) verlaufende Achsen in bezug auf den Wagen (20) schwenkbar sind.

6. Treppenlift nach einem der Ansprüche 1 bis 5, dadurch g e k e n n z e i c h n e t, daß die Zahnstange gebildet wird durch Zahnkörper, insbesondere Kugeln (32) und Distanzstücke (34), die in abwechselnder Anordnung innerhalb der rohrförmig ausgebildeten Führungsschienen liegen und einen Eintritt der Zähne (38) der Zahnräder (36) zwischen die Zahnkörper gestatten.

7. Treppenlift nach Anspruch 6, dadurch g e k e n n - z e i c h n e t, daß die rohrförmigen Führungsschienen (16,18) an den Enden verschlossen sind und daß die Reihe der Zahnkörper und Distanzstücke innerhalb der Führungsschienen nach unten und/oder oben durch eine Druckfeder abgestützt ist.

8. Treppenlift nach einem der Ansprüche 1 bis 7, g e - k e n n z e i c h n e t durch je ein weiteres oberes und unteres Führungsorgan (26,28), das die Führungsschienen (16,18) von beiden Seiten her mit Führungsrollen (68,70, 72,74) umfaßt und um eine quer zu den Führungsschienen (16,18) verlaufende Achse in bezug auf den Wagen schwenkbar ist, und daß wenigstens zwei übereinander liegende Führungsorgane (22,24;26,28) auf einem gemeinsamen Träger (76,84) befestigt sind, der in bezug auf den Wagen (20) begrenzt senkrecht verschiebbar ist.

9. Treppenlift nach einem der Ansprüche 1 bis 8, dadurch g e k e n n z e i c h n e t, daß beiderseits des Zahnrades (36) Führungsscheiben (48,50) vorgesehen sind, die eine von dem Zahnrad unterbrochene konkave Lauffläche bilden.

10. Treppenlift nach einem der Ansprüche 6 bis 9, dadurch g e k e n n z e i c h n e t, daß die Kugeln (32) einen geringeren Durchmesser als der Innendurchmesser der rohrförmigen Führungsschiene (16) aufweisen, und daß die Distanzkörper (94) insgesamt zylindrisch ausgebildet sind, einen im wesentlichen der Breite und der Eingriffstiefe der Zähne (36) des Zahnrades (38) entsprechenden Längsschlitz (96) aufweisen und an beiden stirnseitigen Enden

0043592

des Längsschlitzes (96) kalottenförmig entsprechend dem
Durchmesser der Kugeln ausgespart sind.

0043592

Fig. 1

0043592

Fig. 3

Fig. 2

0043592

Fig. 4

Fig. 5

0043592

- 4/4 -

Fig. 6

Fig. 7

Fig. 8

Fig. 9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A - 2 556 534 (W. HABEGGER) <br> * Seite 7, Zeile 9 - Seite 9, Zeile 21; Figuren 1-3 * | 1,4 |
| | DE - A - 2 434 009 (STEINERT) <br> * Seite 6, Zeile 22 - Seite 10, Zeile 28; Figuren 1-8 * | 1 |
| | US - A - 2 212 388 (W.E. CHENEY) <br> * Spalte 1, Zeile 1 - Spalte 6, Zeile 68; Figuren 1-8 * | 1 |
| | FR - A - 2 388 750 (RIGERT) <br> * Seite 3, Zeile 23 - Seite 4, Zeile 18; Seite 5, Zeile 36 - Seite 6, Zeile 26; Figuren 1,2, 6-8 * <br> & DE - A - 2 719 120 | 3,6 |
| | FR - A - 2 277 759 (H. KERNEN) <br> * Seite 2, Zeile 17 - Seite 5, Zeile 15; Figuren 1-9 * <br> & CH - A - 579 503 | 3,6 |

**KLASSIFIKATION DER ANMELDUNG (Int. Cl.³)**

B 66 B 9/08
F 16 H 55/26

**RECHERCHIERTE SACHGEBIETE (Int. Cl.³)**

B 66 B 9/02
        9/08
F 16 H 55/26
        19/00
        49/00
B 65 G 35/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-08-1981 | ZAEGEL |

EPA form 1503.1   06.78